# EUROPÄISCHE PATENTSCHRIFT

(11) **EP 0 668 206 B1**
(45) Veröffentlichungstag und Bekanntmachung des Hinweises auf die Patenterteilung: **07.05.1997**
(21) Anmeldenummer: 95101955.3
(22) Anmeldetag: 14.02.1995
(51) Int. Cl.: B62D 7/14, B62D 13/04

(54) **Verwendung eines Lenkungsdämpfers als Stabilisierungsvorrichtung einer Nachlauflenkachse für Kraftfahrzeuge od. dgl. Fahrzeuge**
Utilisation of a steering damper as a stabilisation device for the self-tracking axle of a motor vehicle
Utilisation d'un amortisseur de direction comme dispositif de stabilisation d'un essieu traîné orientable pour automobiles et autres véhicules

(30) Priorität: 21.02.1994 DE 4405325
(43) Veröffentlichungstag der Anmeldung: 23.08.1995
(73) Patentinhaber: Otto Sauer Achsenfabrik Keilberg, 63856 Bessenbach-Keilberg (DE)
(72) Erfinder: Koschinat, Hubert B., D 63768 Hösbach (DE)
(74) Vertreter: KEIL & SCHAAFHAUSEN Patentanwälte

(56) Entgegenhaltungen:
- EP-A- 0 246 461
- PROF. DIPL.-ING. JÖRNSEN REIMPELL 'Fahrwerktechnik: Lenkung' 1984 , VOGEL-BUCHVERLAG , WÜRZBURG, DE Seiten 124 - 127: Kapitel 3.4.4 Mit wegabhängiger Dämpfung * das ganze Dokument *
- PATENT ABSTRACTS OF JAPAN vol. 11 no. 135 (M-585) ,28.April 1987 & JP-A-61 275065 (HINO MOTORS LTD) 5.Dezember 1986,

## Beschreibung

Die Erfindung bezieht sich auf eine Nachlauflenkachse für Kraftfahrzeuge, Anhänger, Sattelauflieger oder dgl. Fahrzeuge, mit einem Achskörper, an welchem die Räder über mittels einer Spurstange miteinander verbundene Lenkgabeln angelenkt sind, sowie mit einer zwischen dem Achskörper und einem entsprechend den Rädern auslenkbaren Teil wirksamen Stabilisiervorrichtung. Nachlauflenkachsen werden in Nutzfahrzeugen insbesondere deshalb eingesetzt, weil sie den Reifenverschleiß reduzieren und die Lenkeigenschaften verbessern. Bei Nachlauflenkachsen ist der Radaufstandspunkt gegenüber der Lenkachse, in Fahrzeuglängsrichtung gesehen, um den Nachlauf n versetzt. Der Nachlauf bewirkt, daß die Räder der Nachlauflenkachse stets gewillt sind, dem Fahrverlauf des Fahrzeuges zu folgen, ohne dabei nennenswerte Reifenseitenkräfte aufzubauen. Bei Geradeausfahrt beispielsweise sorgt dieser Nachlaufeffekt dafür, daß die Räder der Nachlauflenkachse immer wieder in die stabile Geradeausfahrlage gedrückt werden. Dieser grundsätzlich wünschenswerte Nachlaufeffekt verursacht bei höheren Geschwindigkeiten aber eine Flatterbewegung der Räder um eine im wesentlichen senkrecht zur Fahrbahn stehende Schwenkachse. Um diese Flatterneigung zu reduzieren, sind bereits Lenkungsdämpfer vorgeschlagen worden. Die Kraft-Weg-Kennlinie derartiger Lenkungsdämpfer hat unter der Voraussetzung konstanter Dämpfergeschwindigkeit einen nahezu konstanten Verlauf. Dabei hängt die Dämpferkraft im wesentlichen nur von der Dämpfergeschwindigkeit und nur unwesentlich vom Dämpferweg ab. Zusätzlich zu derartigen herkömmlichen Lenkungsdämpfern ist es daher erforderlich, weitere Lenkstabilisier-Vorrichtungen zu verwenden, was den baulichen Aufwand erhöht.

In der DE 19 45 589 C2 wird eine Stabilisiervorrichtung für Nachlauflenkachsen von Kraftfahrzeugen, Anhängern und Sattelaufliegern vorgeschlagen, welche mit zwei einseitig wirkenden pneumatischen Stellmotoren arbeitet, deren Arbeitsräume dauernd mit vorzugsweise automatisch lastabhängiger Druckluft beaufschlagt sind und je an einem auslenkenden Teil der Nachlauflenkachse angreifen.

Aus der EP 0 246 461 A1 ist eine Stabilisiervorrichtung für Nachlauflenkachsen bekannt, bei welcher Drucklager zwischen den Lenkschenkeln und dem Achskörper befestigt sind, welche wellenförmige Gleitflächen aufweisen und in ihrer Ausgangslage die Geradeausfahrt der Achse stabilisieren sollen.

Nachteilig bei den bekannten Konzeptionen sind hohe Fertigungskosten bedingt durch erheblichen Bauaufwand und hohe Anzahl der zu verwendenden Teile. Stabilisiervorrichtungen mit pneumatischen Stellmotoren bauen zudem recht groß, was insbesondere bei Nachlauflenkachsen mit kleinen Spurweiten problematisch ist. Sie sind außerdem mit zusätzlichem Aufwand für die vorzugsweise automatisch lastabhängige Drucksteuerung verbunden.

Aus Reimpell J., Fahrwerktechnik: Lenkung, Würzburg, 1. Auflage 1984, S. 119 - 127 und 130 (ISBN 3-8023-0739-9) sind wegabhängige Dämpfer für zwangsgelenkte Vorderachsen an sich bekannt, um das Lenkradmoment gering zu halten.

Aufgabe der Erfindung ist es, eine Nachlauflenkachse der eingangs genannten Art vorzuschlagen, bei welcher die aufgezeigten Nachteile vermieden sind und welche bessere Stabilisiereigenschaften, geringes Gewicht und geringe Abmessungen hat sowie hinsichtlich ihrer Stabilisiervorrichtung preiswert herzustellen ist.

Diese Aufgabe wird gelöst durch die Verwendung eines an sich bekannten Lenkungsdämpfers, dessen Kraft-Wege-Kennlinie in der Weise wegabhängig ist, daß die Dämpferkraft unter der Voraussetzung konstanter Dämpfungsgeschwindigkeit in einem Bereich kleiner Auslenkungen - also im Bereich der Geradeausfahrt - einen verhältnismäßig hohen, im wesentlichen konstanten Wert aufweist und anschließend mit zunehmender Auslenkung verhältnismäßig steil abfällt, als eine zwischen dem Achskörper und einem entsprechend den Rädern auslenkbaren Teil wirksame Stabilisierungsvorrichtung für Nachlauflenkachsen von Kraftfahrzeugen, Anhängern, Sattelaufliegern oder dergleichen Fahrzeugen, an deren Achskörper die Räder über mittels einer Spurstange miteinander verbundene Lenkgabeln angelenkt sind.

Bei einer solchen Nachlauflenkachse hat die einen nicht nur geschwindigkeitsabhängigen sondern auch in besonderer Weise wegabhängigen Lenkungsdämpfer aufweisende Stabilisiervorrichtung geringes Gewicht und geringe Baugröße und sie ist leicht herstellbar. Flatterbewegungen bei Geradeausfahrt werden weitestgehend vermieden, denn die Stabilisiervorrichtung vermag um die Null-Lage herum - also im Bereich der Geradeausfahrt - wesentlich höhere Kräfte als herkömmliche Dämpfer aufzubauen und trotzdem bei Kurvenfahrt wesentlich geringere Kräfte als herkömmliche Dämpfer zu erzeugen. Bei Geradeausfahrt wirken auf die Räder der Lenkachse impulsartige Kräft, welche durch die unebene Fahrbahn und/oder Unwuchten der Räder hervorgerufen werden. Diese Kräfte zerren an den Lenkschenkeln und stören so in Form von Flatterbewegungen den Geradeauslauf. Bei der erfindungsgemäßen Lenkstabilisierung werden gerade diese hochfrequenten, impulsartigen Störkräfte besonders gut absorbiert. Die erfindungsgemäße Lenkachse zeigt deshalb einen besseren Geradeauslauf als herkömmliche Lenkachsen, welche mit federnden Stellgliedern arbeiten. Aufgrund der speziellen Kraft-Wege-Kennlinie der erfindungsgemäß eingesetzten Stabilisiervorrichtung kann auf die sonst notwendigen zusätzlich zu einem Dämpfer wirkenden Stabilisiervorrichtung verzichtet werden.

Trotz der Sicherung eines einwandfreien Geradeauslaufs der Achse bei Geradeausfahrt ist bei langgestreckter Kurvenfahrt bis hin zum Rangieren des Fahrzeugs die Lenkachse leichtgängig einzulenken und der Lenkbewegung der Räder wirken nur geringe Reaktionsmomente entgegen. Die Reifen der Lenkachse können keinen Schräglaufwinkel aufbauen. Die erfindungsgemäße Lenkachse berücksichtigt auch die unterschiedlichen Einsatzbedingungen. Die erfindungsgemäß wirksame Dämpferkraft ist konstruktionsbedingt bei Kurvenfahrt wesentlich geringer als bei Geradeausfahrt, unter der Vorraussetzung gleicher Lenkgeschwindigkeit. Zudem ist die Lenkgeschwindigkeit des Rades bei Kurvenfahrt in der Regel verhältnismäßig klein, so daß der Dämpfer der Lenkbewegung des Rades nur geringe Widerstandskräfte entgegensetzt. Andererseits reagiert er auf die hochfrequenten und schnellen Störgrößen, welche durch die Fahrbahn oder Unwuchten hervorgerufen werden, mit großen Kräften.

Ein besonderes Charakteristikum der Kraft-Wege-Kennlinie liegt bei einer besonderen Ausgestaltung des Erfindungsgedankens darin, daß die Kraft-Wege-Kennlinie in jedem Quadranten des durch die Koordinatenachsen Dämpferkraft und Weg aufgespannten karthesischen Koordinatensystems wenigstens einen Wendepunkt aufweist.

Die Dämpferkraft nimmt insbesondere bei größerer Auslenkung nach dem verhältnismäßig steilen Abfall - also bei Kurvenfahrt - einen im wesentlichen konstanten Wert an, der wesentlich kleiner als der Wert im Bereich der Geradeausfahrt ist.

Dabei fällt die Kraft-Wege-Kennlinie vorzugsweise im Anschluß an den im wesentlichen konstanten Wert im Bereich der Geradeausfahrt zunächst linear mit einer Neigung zwischen etwa 30 und 60° ab und geht dann nach außen hin wieder in einen im wesentlichen konstanten Wert über. Der Lenkungsdämpfer weist also vorzugsweise eine statische Kraft-Wege-Kennlinie auf, bei der die Dämpferkraft für den Geradeauslauf und für große Auslenkungen der Lenkachse jeweils einen im wesentlichen konstanten Wert auf, variiert im Bereich mittlerer Auslenkungen der Lenkachse als Funktion der Auslenkung und fällt insbesondere im wesentlichen linear ab, um dann in den niedrigeren im wesentlichen konstanten Wert für Kurvenfahrt überzugehen. Unter einer statischen Kennlinie wird eine solche Kennlinie des Lenkungsdämpfers verstanden, bei welcher die Dämpferkraft in Abhängigkeit von der Auslenkung des Dämpfers dargestellt ist, wobei die Dämpfergeschwindigkeit, also beispielsweise die Geschwindigkeit eines Kolbens in einem Hydraulikzylinder, konstant ist. Ein Lenkungsdämpfer mit einer derartigen statischen Kennlinie weist den Vorteil auf, daß den insbesondere im Geradeauslauf auftretenden, hochfrequenten Störgrößen, welche durch die Fahrbahn oder Unwuchten der Räder hervorgerufen werden, mit großen Dämpferkräften entgegengewirkt wird. Bei Kurvenfahrten ist die Dämpferkraft jedoch wesentlich geringer als bei der Geradeausfahrt, so daß ein leichtgängiges Einlenken der Lenkachse gewährleistet ist, ohne daß der Lenkungsdämpfer mit hohen Dämpfungskräften entgegenwirkt.

Die Kraft-Wege-Kennlinie fällt bei einer bevorzugten Ausgestaltung der Erfindung je nach der Lenkgeschwindigkeit von dem maximalen Wert bei Geradeausfahrt bei Kurvenfahrt auf etwa 20 bis 70%, vorzugsweise etwa 50%, dieses Wertes ab.

Dabei ist ferner vorteilhaft die Kraft-Wege-Kennlinie in jedem der Quadranten im wesentlichen identisch ausgebildet, so daß die Dämpferkraft für Auslenkungen der Lenkachse nach links und nach rechts sowie für Zug- oder Druckbeanspruchung im wesentlichen die gleiche Abhängigkeit von der Auslenkung der Lenkachse bzw. dem Hub des Lenkungsdämpfers aufweist. Wenn die Kennlinie im wesentlichen spiegelsymmetrisch zur Dämpferkraft-Koordinatenachse ausgebildet ist, ist ein von der Richtung der Auslenkung der Lenkachse unabhängiges Dämpfungsverhalten gewährleistet.

Gemäß einer besonders vorteilhaften baulichen Ausführungsform der Erfindung weist der Lenkungsdämpfer einen Hydraulikzylinder mit einem, z. B. an der Zylinderwandung vorgesehenen Bypass für das Hydraulikfluid auf. Der Bypass ist in Abhängigkeit von dem Hub des in dem Hydraulikzylinder geführten Kolbens wirksam. Diese Maßnahme gewährleistet eine besonders einfache bauliche Ausführung mit einer von dem Grad der Auslenkung der Lenkachse abhängigen Dämpferkraft. Der Lenkungsdämpfer hat dabei die über den Hub des in den dem Hydraulikzylinder geführten Kolbens geforderte unterschiedliche Dämpfung.

Der Bypass ist mit Vorteil als in die Zylinderinnenwand eingelassene Längsnut ausgebildet. Ein solcher Bypass ist einfach herzustellen und die Bypassfunktion sicher gewährleistet.

Die Längsnut kann dabei nahezu über die Länge des Hydraulikzylinders reichen, mit Ausnahme eines kurzen nutfreien mittleren Wandabschnitts im Bereich der Geradeausfahrt, bei welcher sich der Kolben etwa in der Höhe der Mittelquerebene des Hydraulikzylinders befindet, in deren Bereich kein Bypass vorgesehen ist, und somit hohe Dämpferkräfte erzeugt werden. Bei Kurvenfahrt ist die Dämpferkraft wegen der in diesem Bereich der Zylinderinnenwand vorgesehenen Längsnuten dagegen entsprechend verringert.

Von Vorteil entspricht die axiale Erstreckung einer Längsnut etwa dem vier- bis sechsfachen der Länge des nutfreien Wandabschnitts.

Wenn die Endbereiche der Zylinderinnenwand nutfreie Endabschnitte aufweisen, ist auf einfache Weise ein hydraulischer Endanschlag für den im Zylinder geführten Kolben verwirklicht.

Die Nutausläufe sind bei einer weiteren Ausgestaltung der Erfindung mit kontinuierlich abnehmenden Nutquerschnitten ausgestattet, so daß sich die Dämpferkraft bei dem Übergang von hoher zu niedriger Dämpfung und umgekehrt allmählich und nicht sprunghaft ändert.

Mit der Erfindung wird ferner vorgeschlagen, daß die Stabilisiervorrichtung zwischen dem Achskörper und der Spurstange oder einem Lenkhebel wirksam ist.

Ein weiteres Erfindungsmerkmal besteht darin, daß die Stabilisiervorrichtung beidendig über ein Lagerauge mit dem Achskörper bzw. dem auslenkbaren Teil, wie der Spurstange, verbunden ist, um eine Winkelbeweglichkeit der Dämpfungsvorrichtung um die Fahrzeuglängsachse zu gewährleisten.

Weitere Ziele, Vorteile und Anwendungsmöglichkeiten der Erfindung ergeben sich aus der nachfolgenden Beschreibung von Ausführungsbeispielen anhand der Zeichnung.

Es zeigen:
- Figur 1: eine statische Kraft(F)-Wege-(S)-Kennlinie einer bei der erfindungsgemäßen Lenkachse eingesetzten Stabilisiervorrichtung,
- Figur 2: eine Rückansicht einer nach der Erfindung ausgestalteten Nachlauflenkachse mit Stabilisiervorrichtung,
- Figur 3: eine Draufsicht der Nachlauflenkachse nach Figur 2, und
- Figur 4: eine schematische Schnittdarstellung eines bei der Erfindung einsetzbaren Lenkungsdämpfers.

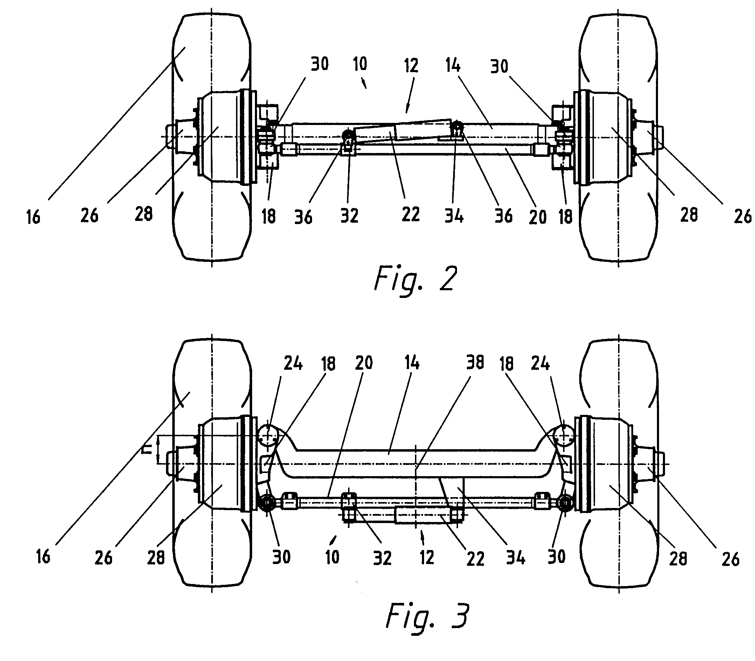

Die in den Figuren 2 und 3 dargestellte als Nachlauflenkachse ausgebildete Lenkachse 10 weist eine Stabilisiervorrichtung 12 zur Lenkstabilisierung auf. Die Lenkachse 10 ist im wesentlichen symmetrisch zu einer Fahrzeuglängsachse aufgebaut und weist einen Achskörper 14 auf, welcher an beiden Enden in Vorwärtsfahrrichtung gekröpft ist. Über Gelenke 24 ist der Achskörper 14 mit Lenkgabeln 18 verbunden. Die Lenkgabeln 18 folgen der Lenkeinschlagbewegung ebenso wie die an den Lenkgabeln 18 aufgehängten Bauteile. Bei diesen Bauteilen handelt es sich im wesentlichen um eine Nabe 26 und eine Bremstrommel 28 sowie um die nur schematisch angedeuteten Räder 16.

Die Lenkgabeln 18 sind zur Gewährleistung der Parallellstellung der Räder 16 über Gelenke 30 mit einer Spurstange 20 verbunden. Die einen Lenkungsdämpfer 22 aufweisende Stabilisiervorrichtung 12 ist einerseits mittels einer verschraubten Klemmgabel 32 an der Spurstange 20 befestigt, andererseits über einen an dem Achskörper 14 vorgesehenen Dämpferanschluß 34 mit dem Achskörper 14 verbunden. Die beiden Enden des Lenkungsdämpfers 22 weisen elastische Lageraugen 36 auf, so daß eine Winkelbeweglichkeit des Lenkungsdämpfers 22 gewährleistet ist. Die Teile des Lenkungsdämpfers 22 führen beim Lenken der Achse Relativbewegungen zueinander aus, welche aus der Verschiebung der Spurstange 20 relativ zu dem Achskörper 14 herrühren.

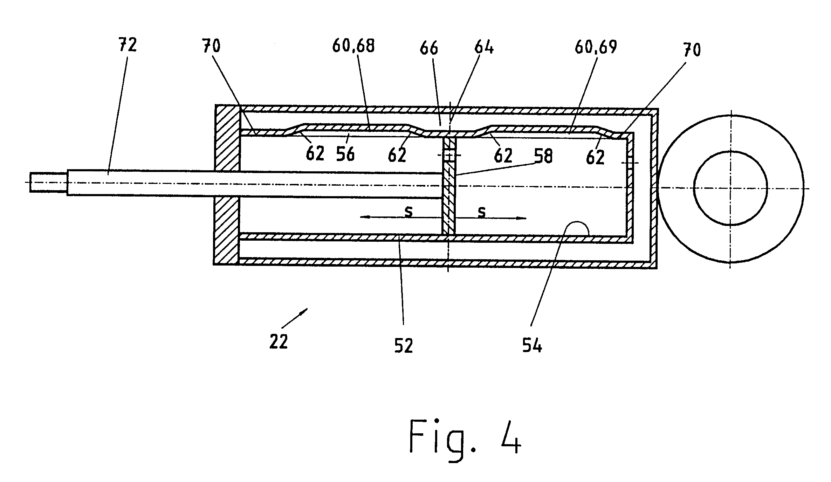

Bei dem in Figur 4 dargestellten Lenkungsdämpfer 22 ist in dem Innenrohr eines doppelwandigen hydraulischen Zylinders 52 ein Kolben 58 verschiebbar geführt, wobei der Kolben 58 ein Kolbenventil und der Innenzylinder des Hydraulikzylinders 52 ein Bodenventil aufweisen. Der Kolben 58 bewegt sich in dem Innenzylinder unter Überwindung der Strömungswiderstandes, wobei das von der Kolbenstange 72 verdrängte Fluid durch das Bodenventil strömt.

Der Hydraulikzylinder 52 ist an seiner Zylinderinnenwand 54 derart mit einem Bypass 56 ausgestattet, daß eine hubabhängige bzw. auslenkungsabhängige Dämpfung des Lenkungsdämpfers 22 erhalten wird. Abhängig von seinem Hub überfährt der Kolben 58 den Bypass 56, wobei mittels des über den Bypass 56 strömenden Fluids die Dämpfung des Lenkungsdämpfers 22 verringert wird.

Der Bypass 56 ist als Längsnut 60 ausgebildet, welcher aus zwei im Abstand befindlichen Nutabschnitten 68, 69 besteht, wobei die Nutabschnitte 68, 69 symmetrisch zu einer Mittelquerebene 64 des Hydraulikzylinders 52 angeordnet sind. Zwischen den Nutabschnitten 68, 69 befindet sich ein nutfreier mittlerer Wandabschnitt 66, in dessen Bereich sich der Kolben 58 in der Mittelstellung, d. h. bei Geradeauslauf und geringen Auslenkungen der Lenkachse 10 befindet. Die axiale Erstreckung einer Längsnut 60; 68, 69 entspricht etwa dem vier- bis sechsfachen der Länge des nutfreien Wandabschnitts 66. In den Endbereichen der Zylinderinnenwand 54 sind ebenfalls nutfreie Endabschnitte 70 vorgesehen. Dabei sind die Nutausläufe 62 der Nutabschnitte 68, 69 mit kontinuierlich abnehmendem Nutquerschnitt versehen.

Der Lenkungsdämpfer 22 erzeugt daher bei Geradeausfahrt, welche der in Figur 4 dargestellten Stellung des Kolbens 58 in dem Hydraulikzylinder 52 entspricht, hohe Dämpferkräfte, während in der Kurvenfahrt die Dämpferkräfte aufgrund des als Längsnut 60; 68, 69 ausgebildete Bypass 56 wesentlich geringer ist. Dadurch, daß die Längsnuten 60; 68, 69 Nutausläufe 62 mit kontinuierlich abnehmendem Nutquerschnitt aufweisen, wird ein kontinuierlicher Übergang zwischen der hohen Dämpferkraft bei Geradeausfahrt und der niedrigen Dämpferkraft bei Kurvenfahrt geschaffen.

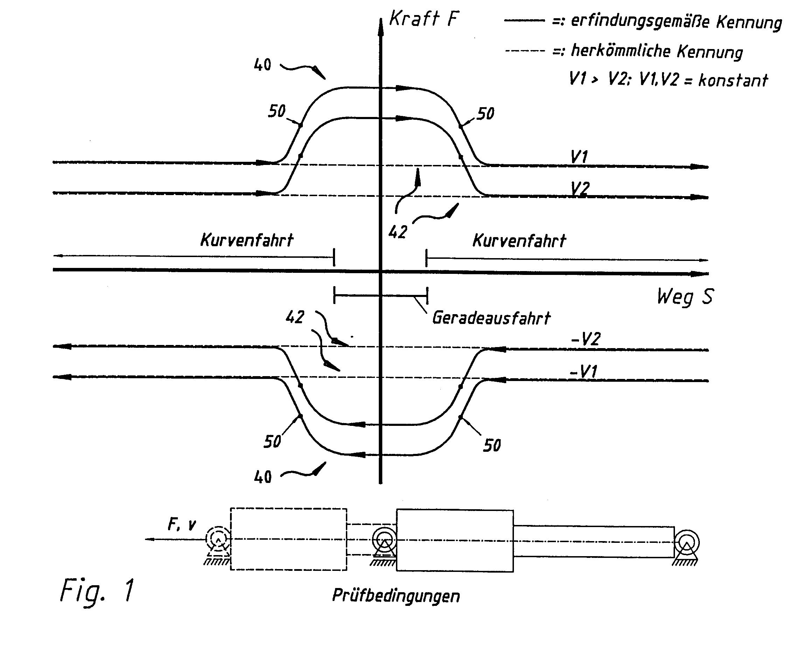

Die statische Kraft(F)-Wege(S)-Kennlinie 40 der erfindungsgemäßen Stabilisiervorrichtung 12 ist in Figur 1 dargestellt. Im Geradeauslauf und bei kleinen Auslenkungen S der Lenkachse 10 bzw. des Kolbens 58 von Figur 4 aus der mittleren Lage ist die Dämpferkraft F im wesentlichen konstant und weist einen wesentlich höheren Wert gegenüber der Dämpferkraft herkömmlicher Stabilisiervorrichtungen auf, deren Kennlinie in Figur 1 gestrichelt eingezeichnet ist. Einen ebenfalls konstanten Verlauf weist die Kennlinie nach Figur 1 in einem Bereich großer Auslenkungen S der Lenkachse 10 bzw. des Kolbens 58 auf, wobei dieser letztere Wert etwa der Hälfte der maximalen Dämpferkraft entspricht. Die höheren Dämpferkräfte im Geradeauslauf werden dadurch erzielt, daß die Drosselwirkung des Kolbens 58 größer als bei herkömmlichen Anordnungen ist, bei welchen die Dämpferkraft nur geschwindigkeitsabhängig aber praktisch nicht wegeabhängig ist. Zwischen den beiden im wesentlichen konstanten Bereichen fällt die Dämpferkraft gemäß Figur 1 bei mittleren Auslenkungen S als Funktion des Hubes bzw. der Auslenkung im wesentlichen linear ab. Diese statische Kennlinie 40 des Lenkungsdämpers 22 ergibt sich dann, wenn die Geschindigkeit des Kolbens 58 konstant gehalten ist.

Figur 1 veranschaulicht zwei Kennlinien 40 unterschiedlicher Geschwindigkeit V1 und V2, wobei V1 größer als V2 ist. Mit höherer Dämpfergeschwindigkeit steigt das Niveau der Kennlinie 40 bzw. der Dämpferkraft F.

Die hohen Dämpferkräfte im Geradeauslauf der Lenkachse 10 verhindern zuverlässig ein Flattern der Räder, wobei aufgrund der speziellen Kennlinien 40 auf sonst übliche zusätzlich zu dem Lenkungsdämpfer 22 wirkende Stabilisiervorrichtungen verzichtet werden kann. Bei Kurvenfahrten bis hin zum Rangieren des Fahrzeugs läßt sich die Lenkachse 10 dennoch leichtgängig lenken, wobei der Lenkbewegung der Räder nur geringe Dämpferkräfte entgegengesetzt werden.

### Bezugszeichenliste:

- 10: Lenkachse
- 12: Stabilisiervorrichtung
- 14: Achskörper
- 16: Räder
- 18: Lenkgabeln
- 20: Spurstange
- 22: Lenkungsdämpfer
- 24: Gelenke
- 26: Naben
- 28: Bremstrommeln
- 30: Gelenke
- 32: Klemmgabel
- 34: Dämpferanschluß
- 36: Lageraugen
- 38: Längsachse
- 40: statische Kennlinie (erfindungsgemäß)
- 42: statische Kennlinie (Stand der Technik)
- 44: dynamische Kennlinie
- 46: dynamische Kennlinie, Stand der Technik
- 48: konkave Krümmung
- 50: Wendepunkte
- 52: Hydraulikzylinder
- 54: Zylinderinnenwand
- 56: Bypass
- 58: Kolben
- 60: Längsnut
- 62: Nutausläufe
- 64: Mittelquerebene
- 66: Wandabschnitt
- 68: Nutabschnitt
- 69: Nutabschnitt
- 70: Endabschnitte
- 72: Kolbenstange
- F: Dämpferkraft
- S: Auslenkung, Hub
- V: Dämpfergeschwindigkeit

## Patentansprüche

1. Verwendung eines an sich bekannten Lenkungsdämpfers (22), dessen Kraft(F)-Wege(S)-Kennlinie (40) in der Weise wegabhängig ist, daß die Dämpferkraft (F) unter der Voraussetzung konstanter Dämpfungsgeschwindigkeit in einem Bereich kleiner Auslenkungen (S) - also im Bereich der Geradeausfahrt - einen verhältnismäßig hohen, im wesentlichen konstanten Wert aufweist und anschließend mit zunehmender Auslenkung (S) verhältnismäßig steil abfällt, als eine zwischen einem Achskörper (14) und einem entsprechend den Rädern (16) auslenkbaren Teil wirksame Stabilisiervorrichtung (12) für Nachlauflenkachsen von Kraftfahrzeugen, Anhängern, Sattelaufliegern oder dergleichen Fahrzeugen, an deren Achskörper (14) die Räder (16) über mittels einer Spurstange (20) miteinander verbundene Lenkgabeln (18) angelenkt sind.

2. Verwendung nach Anspruch 1, dadurch gekennzeichnet, daß die Kraft(F)-Weg(S)-Kennlinie (40) in jedem Quadranten des durch die Koordinatenachsen Dämpferkraft (F) und Weg (S) aufgespannten karthesischen Koordinatensystems wenigstens einen Wendepunkt (50) aufweist.

3. Verwendung nach Anspruch 1, dadurch gekennzeichnet, daß die Dämpferkraft (F) bei größerer Auslenkung nach dem verhältnismäßig steilen Abfall - also bei Kurvenfahrt - einen im wesentlichen konstanten Wert annimmt, der wesentlich kleiner als der Wert im Bereich der Geradeausfahrt ist.

4. Verwendung nach einem der Ansprüche 1 bis 3, dadurch gekennzeichnet, daß die Kraft (F)-Wege(S)-Kennlinie (40) im Anschluß an den im wesentlichen konstanten Wert im Bereich der Geradeausfahrt zunächst im wesentlichen linear abfällt und dann wieder in einen im wesentlichen konstanten Wert übergeht.

5. Verwendung nach einem der Ansprüche 1 bis 4, dadurch gekennzeichnet, daß die Kraft (F)-Wege(S)-Kennlinie (40) von dem maximalen Wert bei Geradeausfahrt bei Kurvenfahrt auf etwa 20 bis 70%, vorzugsweise etwa 50%, dieses Wertes abfällt.

6. Verwendung nach einem der Ansprüche 1 bis 5, dadurch gekennzeichnet, daß die Kraft(F)-Wege(S)-Kennlinie (40) im wesentlichen spiegelsymmetrisch zur Dämpferkraft-Koordinatenachse verläuft.

7. Verwendung nach einem der vorhergehenden Ansprüche, dadurch gekennzeichnet, daß der Lenkungsdämpfer (22) einen Hydraulikzylinder (52) mit einem Bypass (56) für das Hydraulikfluid aufweist und der Bypass (56) in Abhängigkeit von dem Hub (S) des im Hydraulikzylinder (52) geführten Kolbens (58) wirksam oder unwirksam ist.

8. Verwendung nach Anspruch 7, dadurch gekennzeichnet, daß der Bypass (56) als in die Zylinderinnenwand (54) eingelassene Längsnut (60, 68, 69) ausgebildet ist.

9. Verwendung nach Anspruch 8, dadurch gekennzeichnet, daß die Längsnut (60'; 68, 69) nahezu über die gesamte Länge des Hydraulikzylinders (52) reicht mit Ausnahme eines, vorzugsweise zur Mittelquerebene (64) symmetrischen, kurzen mittleren Wandabschnitts (66).

10. Verwendung nach Anspruch 8 oder 9, dadurch gekennzeichnet, daß die Endbereiche der Zylinderinnenwand (54) nutfreie Endabschnitte (70) aufweisen.

11. Verwendung nach einem der Ansprüche 8 bis 10, dadurch gekennzeichnet, daß die Längsnut (60) äußere Nutausläufe (62) mit kontinuierlich abnehmendem Nutquerschnitt aufweist.

12. Verwendung nach einem der vorhergehenden Ansprüche, dadurch gekennzeichnet, daß die Stabilisiervorrichtung (12) zwischen dem Achskörper (14) und der Spurstange (20) oder einem Lenkhebel wirksam ist.

13. Verwendung nach einem der vorhergehenden Ansprüche, dadurch gekennzeichnet, daß die Stabilisiervorrichtung (12) beidendig über ein Lagerauge (36) mit dem Achskörper (14) bzw. dem auslenkbaren Teil, z. B. der Spurstange (20), verbunden ist.

## Claims

1. Use of a steering damper (22) known in itself, the force (F)-path (S) curve (40) of which is path-dependent in the manner that the damper force (F), assuming a constant damping rate within a range of minor deviations (S) - i.e. in the tinge of straight travel - has a relatively high, essentially constant value and then falls relatively steeply as the deflection (S) increase, as an active stabilizing device (12) between in axle body (14) and a part which can be deflected in accordance with the wheels (16) for trailing axles of motor vehicles, trailers, semi-trailers or similar vehicles, on the axle body (14) of which the wheels (16) are steered by means of steering forks (18) connected together by means of a trick rod (20).

2. Use according to claim 1, characterized in that in each quadrant of the cartesian co-ordinate system defined by the co-ordinate axes damper force (F) and path (S), the force (F)-path (S) curve (40) has at least one inflection point (50).

3. Use according to claim 1, characterized in that on greater deflection, after the relatively steep drop - ie. when travelling round corners - the damping force (F) assume an essentially constant value which is essentially less than the value in the range of the straight travel.

4. Use according to any of claims 1 to 3, characterized in that the force (F)-path (S) curve (40), after the essentially constant value in the area of the straight running, falls first essentially linear and then transforms again into an essentially constant value.

5. Use according to any of claims 1 to 4, characterized in that on curve travel, the force (F)-path (S) curve (40) falls from the maximum value of straight travel to approximately 20 to 70%, preferably around 50% of this value.

6. Use according to any of claims 1 to 5, characterized in that the force (F)-path (S) curve (40) runs essentially symmetrical to the damper force co-ordinate axis.

7. Use according to any of the previous claims, characterized in that the steering damper (22) has a hydraulic cylinder (52) with a bypass (56) for the hydraulic fluid and the bypass (56) is active or inactive as a function of the lift (S) of the piston (58) guided in the hydraulic cylinder (52).

8. Use according to claim 7, characterized in that the bypass (56) is designed as a longitudinal groove (60, 68, 69) let into the cylinder inner wall (54).

9. Use according to claim 8, characterized in that the longitudinal groove (60'; 68, 69) extends almost over the entire length of the hydraulic cylinder (52) with the exception of a short centre wall section (66) preferably symmetrical to the centre transverse plane (64).

10. Use according to claim 8 or 9, characterized in that the end areas of the cylinder inner wall (54) have groove-free and sections (70).

11. Use according to any of claims 8 to 10, characterized in that the longitudinal groove (60) has outer groove ends (62) with continuously decreasing groove cross section.

12. Use according to any of the previous claims, characterized in that the stabilising device (12) is active between the axle body (14) and the track rod (20) or a steering arm.

13. Use according to any of the previous claims, characterized in that the stabiliser device (12) is connected at both ends via a bearing eye (36) with the axle body (14) or deflectable part, eg. the track rod (20).

## Revendications

1. Utilisation d'un amortisseur de direction (22) connu en soi, dont la caractéristique (40) force (F) - course (S) est fonction de la course de telle manière que la vitesse d'amortissement étant supposée constante, la force d'amortissement (F) présente une valeur relativement élevée, essentiellement constante, dans une plage correspondant à de faibles déviations (S), donc dans la plage correspondant à l'évolution en ligne droite, et diminue ensuite de façon relativement rapide avec l'accroissement de la déviation (S), en tant que dispositif de stabilisation (12) agissant entre un corps d'essieu (14) et une partie susceptible d'être déviée en fonction du braquage des roues (12), pour des essieux orientables tirés (à déport négatif) de véhicules automobiles, remorques, semi-remorques ou véhicules analogues, les roues (16) étant articulées sur le corps d'essieu (14) en passant par des fusées (18) couplées par une barre d'accouplement (20).

2. Utilisation suivant la revendication 1, caractérisée par le fait que la caractéristique (40) force (F) - course (S) présente au moins un point d'inflexion (50) dans chaque quadrant du système de coordonnées cartésiennes dont les axes sont définis par la force d'amortissement (F) et la course (S).

3. Utilisation suivant la revendication 1, caractérisée par le fait que la force d'amortissement (F) adopte, dans le cas de déviations importantes, à la suite de la diminution relativement rapide, donc en cas d'évolution en virage, une valeur essentiellement constante qui est nettement inférieure à la valeur qu'elle présente dans la plage correspondant à l'évolution en ligne droite.

4. Utilisation suivant l'une des revendications 1 à 3, caractérisée par le fait que la caractéristique (40) force (F) - course (S), à la suite de la valeur essentiellement constante dans la plage correspondant à l'évolution en ligne droite, diminue d'abord de façon essentiellement linéaire et reprend ensuite de nouveau une valeur essentiellement constante.

5. Utilisation suivant l'une des revendications 1 à 4, caractérisée par le fait que la caractéristique (40) force (F) - course (S), en cas d'évolution en virage, diminue de la valeur maximale en cas d'évolution en ligne droite, à environ 20 à 70%, de préférence à environ 50% de cette valeur.

6. Utilisation suivant l'une des revendications 1 à 5, caractérisée par le fait que la caractéristique (40) force (F) - course (S) présente une évolution qui est essentiellement inversement symétrique par rapport à l'axe correspondant à la force d'amortissement.

7. Utilisation suivant l'une des revendications précédentes, caractérisée par le fait que l'amortisseur de direction (22) présente un cylindre hydraulique (52) avec une dérivation (56) pour le fluide hydraulique et que la dérivation (56) est en action ou est hors d'action en fonction de la course (S) du piston (58) guidé dans le cylindre hydraulique (52).

8. Utilisation suivant la revendication 7, caractérisée par le fait que la dérivation (56) est réalisée sous forme de rainures longitudinales (60, 68, 69) ménagées dans la face intérieure (54) de la paroi du cylindre.

9. Utilisation suivant la revendication 8, caractérisée par le fait que la rainure longitudinale (60; 68, 69) s'étend sur presque toute la longueur du cylindre hydraulique (52), excepté sur un court tronçon médian (66) de la paroi, de préférence symétrique par rapport au plan transversal médian (64).

10. Utilisation suivant la revendication 8 ou 9, caractérisée par le fait que les zones d'extrémité de la face intérieure (54) de la paroi du cylindre présentent des tronçons d'extrémité (70) exempts de rainures.

11. Utilisation suivant l'une des revendications 8 à 10, caractérisée par le fait que la rainure longitudinale (60) présente des zones d'extrémité (62) extérieures dans lesquelles la section des rainures diminue de façon continue.

12. Utilisation suivant l'une des revendications précédentes, caractérisé par le fait que le dispositif de stabilisation (12) agit entre le corps d'essieu (14) et la barre d'accouplement (20) ou un levier de commande de roue.

13. Utilisation suivant l'une des revendications précédentes, caractérisée par le fait que le dispositif de stabilisation (12) est relié à ses deux extrémités respectivement par un oeil (36) au corps d'essieu (14) et à une partie susceptible d'être déviée, par exemple la barre d'accouplement (20).
